# EUROPEAN PATENT SPECIFICATION

(11) **EP 3 464 065 B1**
(45) Date of publication and mention of the grant of the patent: **14.10.2020**
(21) Application number: 17725640.1
(22) Date of filing: 30.05.2017
(51) Int. Cl.: B64C 39/02, B64D 17/80

(54) **AN UNMANNED AERIAL VEHICLE (UAV) APPARATUS COMPRISING A RECOVERY SYSTEM**
UNBEMANNTE LUFTFAHRZEUG (UAV)-VORRICHTUNG MIT EINEM BERGUNGSSYSTEM
APPAREIL DE VÉHICULE AÉRIEN SANS PILOTE (UAV) COMPRENANT UN SYSTÈME DE RÉCUPÉRATION

(30) Priority: 31.05.2016 EP 16172065
(43) Date of publication of application: 10.04.2019
(73) Proprietor: Svarmi ehf., 112 Reykjavik (IS)
(72) Inventor: STÉFÁNSSON, Tryggvi, IS-104 Reykjavik (IS)
(74) Representative: Arnason Faktor
(86) International application number: PCT/EP2017/063039
(87) International publication number: WO 2017/207570

(56) References cited:
- DE-U1-202015 006 282
- US-A- 1 320 545
- US-A1- 2015 158 581
- US-A1- 2015 329 204

## Description

### FIELD OF THE INVENTION

The present invention relates to an unmanned aerial vehicle (UAV) apparatus comprising a recovery system, and to a recovery system assembly. The invention also relates to a corresponding method for recovering an unmanned aerial vehicle (UAV) apparatus.

### BACKGROUND OF THE INVENTION

Today very few solutions are available to safely bring down an unmanned aerial vehicle (UAV) apparatus in the case of a malfunction causing reduced or complete loss of control of the UAV apparatus. Therefore when a malfunction occurs the UAV apparatus falls to the ground at great speed causing great damages to the UAV apparatus, equipment onboard and as well as causing great threads to people on the ground and possible damages to properties.

A recovery system that is frequently implemented today is a traditional parachute system, which works well in many cases. For UAV apparatus the parachute is triggered in many cases by a servo motor or similar actuator where a spring or a pyro charge deploy the parachute. Such a solution for handling malfunction of a UAV apparatus can be found in for example German utility model DE 20 2015 00682 using a balloon system or a parachute activated in case of emergencies. US 2015/0158581 A1 proposes to shape the primary arm structures as propeller blades to reduce the vertical speed of the UAV in case of an emergency descent.

One downside of implementing a parachute is that it is very sensitive to the orientation, weather and height above ground at the time the parachute is deployed. This can cause incorrect deployment that can get the parachute tangled rendering it useless and not slow down the UAV apparatus as intended. Furthermore, the parachute takes considerable amount of time to be fully deployed. The UAV apparatus therefore falls a considerable distance before the parachute starts functioning as intended after it has fully deployed, rendering the parachute useless at low heights above ground by not being able to reduce the velocity of the UAV apparatus before impact.

Packaging of the parachute is also very important and requires a certain amount of skill. If not done correctly the parachute may not deploy correctly. Additionally the energy stored within the deploying mechanism, for example a loaded spring, can injure the user if it is accidently triggered while close to the UAV apparatus.

The inventor of the present invention has appreciated that there is thus a need for an UAV apparatus that comprises an improved recovery system for bringing the UAV apparatus safely down to the ground in case of any type of malfunction and has in consequence devised the present invention.

### SUMMARY OF THE INVENTION

It would be advantageous to achieve an improved unmanned aerial vehicle (UAV) apparatus that is equipped with a simple and a reliable recovery system capable of bringing the UAV apparatus safely to ground in case of any type of malfunction and that more importantly prevents accidents towards people on the ground.

In general, the invention preferably seeks to mitigate, alleviate or eliminate one or more of the above mentioned disadvantages singly or in any combination. In particular, it may be seen as an object of the present invention to provide an UAV apparatus that solves the above mentioned problems, or other problems, of the prior art.

To better address one or more of these concerns, a recovery system assembly according to claim 1 and a method for recovering a UAV apparatus according to claim 15 are provided, with preferred embodiments being defined by the dependent claims.

It is thus possible to safely bring the UAV apparatus safely down to the ground, in case of any malfunctions onboard the UAV apparatus, by means of increasing the surface area via the foldable material and thus increasing the coefficient of drag, which obviously greatly reduces the terminal velocity and the kinetic energy of the UAV apparatus.

Also, by deploying foldable material via such a mechanical system the deployment becomes lot quicker than e.g. conventional parachutes. Because the recovery system is guided by foldable arms it can be deployed regardless of the orientation of the UAV apparatus, e.g. when the UAV apparatus is upside down, and thus it is capable of taking the control over the UAV apparatus and adjust the orientation and stop all unwanted spin to ensure that the UAV apparatus falls straight down in a controlled manner towards the surface.

Further, the safety of the UAV apparatus is greatly improved since it is prevented that the UAV apparatus, in case of malfunction, crashes. Today nations worldwide are working on or have finished the making of new and stricter regulations regarding the use of UAV apparatus. Those regulations can limit the use of UAV apparatus in populated areas due to safety hazard in case a UAV apparatus would crash. Accordingly, the UAV apparatus has the potential to allow the use of UAV apparatus in more populated areas due to higher safety. Also the insurance costs for users can be greatly reduced if this invention is installed on the UAV apparatus due to reduced chances of injuring people or cause damages on properties on the ground.

The term UAV apparatus may according to the present invention also be understood as unmanned aerospace vehicle, uninhabited aircraft vehicle, uninhabited aerial vehicle, unmanned air vehicle, unmanned airborne vehicle, unmanned autonomous vehicle, unmanned vehicle, upper atmosphere vehicle, unmanned aerial system, multicopter, multirotor vehicle, octocopter, hexacopter, quadcopter, quadrotor, tricopter, or a drone or drone apparatus or any combination of those mentioned.

In some alternative embodiments of the present invention, in any of its aspects, the invention may be applied in the context of a manned aerial vehicle i.e. with one or more persons positioned in the vehicle when it is flying.

The foldable arms and/or the primary arm structures may be made of metal, composite, wood or plastic material or a combination of those.

In one embodiment, the plurality of foldable arms are arranged such that in the closing position the foldable arms are arranged along the plurality of primary arm structures. As an example, the foldable arms may be arranged underneath the plurality of primary arms, or e.g. be arranged parallel to the plurality of primary arms. Such an arrangement both facilitates the movement of the plurality of foldable arms from the closing position to the open position and also reduces the drag coefficient when the foldable arms are in the open position.

In the context of the present invention, the term 'free end area of the primary arm structure (s)' may be interpreted as meaning broadly the distal end of the primary arm structure(s) relative to the frame structure, for example if the frame structure is substantially centrally positioned in the UAV apparatus, and the primary arm structures are each attached with their proximal end area to the centrally frame structures, as it will understood from the construction of known UAV apparatuses and/or the embodiments given below in the detailed description. It will therefore also be understood that the 'free end area' may be interpreted as not necessarily at an end position, but it could be a position for pivotally mounting the foldable arms not at the extreme end position on the primary arm structure, e.g. it could be at, or around, a middle position on the primary arm structures, or in a position between the middle position and the extreme end of the primary arm structure.

In some embodiments, the plurality of primary arm structures is equal to the number of foldable arms. Each primary arm structure has at least one foldable arm mounted thereon, though it is contemplated that in some cases the number of foldable arms may be different from number of the primary arm structures.

In some embodiments, the plurality of primary arm structures is equal to 3, 4, 5, 6, 7, 8, 9, 10 etc. In alternative or additional embodiments, the plurality of foldable arms is equal to 3, 4, 5, 6, 7, 8, 9, 10 etc. Thus, the possible combinations of primary structures with corresponding foldable arms are numerous, though the skilled person would understand that the recovery system must be able to effectively unfold the foldable material to have the technical effect of reducing vertical velocity of the UAV apparatus.

Thus, in one embodiment, the number of foldable arms in the plurality of foldable arms pivotally mounted on the plurality of primary arm structures may be at least three, preferably at least four.

2. According to the invention, the number of primary arm structures arms in the plurality of primary arm structures extending from the frame structure is at least three, most preferably at least four. According to the invention, each primary arm structure has at least one corresponding foldable arm pivotally mounted thereon.

In one embodiment, the locking-unlocking system comprises at least one actuator connected to the plurality of foldable arms for actuating the movement of the plurality of foldable arms from the closing position to the open position. Accordingly, the locking-unlocking system not only ensures that the plurality of foldable arms are kept in a locked position, but is also capable of quickly activate, in response to the malfunction signal, the recovery system. The at least one actuator may for example include any type of a spring system for quickly actuating the movement of the foldable arms from the closing position to the open position.

In one embodiment, the frame structure comprises a storage area configured to store the foldable material. A simple solution is thus provided to store the foldable material, in an area commonly used for vibration dampening between the UAV main frame and payload and therefore often empty space that can be utilized. The storage area may in one embodiment be connected to the locking-unlocking system where e.g. via the malfunction signal the locking-unlocking system may open the storage area and thus release the foldable material. This may e.g. opening the storage area, e.g. simultaneously to the releasing of the plurality of foldable arms or shortly after releasing of the plurality of foldable arms. In another embodiment, the storage area may e.g. be mechanically connected to the plurality of foldable arms whereby releasing the foldable arms the foldable material is simultaneously deployed. As an example, the foldable material may also be stored within the foldable arms whereby the movement of the foldable arms to the open position may trigger the releasing of the foldable material.

In one embodiment, the storage area may be operable connected to the locking-unlocking system whereby, the releasing of the foldable material may be triggered in response to the malfunction signal.

In one embodiment, the foldable material is mounted to the free end or the free end area of the foldable arms. The surface area of the foldable material is thus maximized when in open position which may be reflected in higher drag coefficient.

In one embodiment, plurality of joints, for example rotational joints or hinges and the like, connect the plurality of foldable arms and plurality of primary arm structures together and allow the plurality of foldable arms to be moved from closing position to open position after the locking-unlocking system has released the foldable arms. An actuator may be located at each of the joints where the foldable arms and the primary arms are connected together, for example spring, that both helps/facilitates moving the plurality of foldable arms to the open position, but may also be configured to control the stability or orientation of the UAV apparatus during fall.

In another embodiment, the foldable arms are connected to the primary arm structure via flexible or movable joint device in such way as to permit motion of the flexible arm relative to the primary arm.

In one embodiment, the step of moving the foldable arms to the open position includes rotating the foldable arms via the at least one joint device between an angular position between 20-260°, such as around 180°, 170°, 160°, 150°, 140°, 130°, 120°, 110°, 100°, 90°, 80°, 70°, 60°, 50°, 45°, 40°, or 30° (or corresponding angles above 180°), such that in the open position the foldable arms act as an extension arms to the primary arms structures. The angular adjustment may depend on the desired drag coefficient and desired stability that may e.g. be automatically adjusted or may be manually operated by e.g. an operator at the ground.

In an embodiment, the at least one joint device is configured to dynamically adjust the angular position of the foldable arms so as to adjust the shape of the foldable material. As an example, any type of actuator such as a spring or any type of a spring system may be utilized to operate the angular position of the foldable arms where e.g. different spring stiffness may be maintained in the foldable arms so as to correct the orientation of the UAV apparatus. As an example, if the UAV apparatus is upside down, the adjustable stiffness in the spring system may ensure that e.g. one (or more) spring may be more flexible than another spring to e.g. flip the UAV apparatus to the correct side to desired, stable position with landing equipment facing straight down.

A control unit may in one embodiment be operable connected to all the actuators to enable an accurate controlling of the recovery system foldable arms or by other means like tilting the center of mass of the UAV apparatus. This would allow an accurate controlling of the UAV apparatus by e.g. changing the horizontal direction of the UAV apparatus and therefore being able to avoid obstacles or other unwanted landing areas. This control could be manual input from the operator or autonomous control.

In one embodiment, each of the foldable arms comprises a sub-arm rotatable mounted to the foldable arms configured to provide an additional extension to the primary arms structures, and where the foldable material is attached to a free end or free end area of the sub-arm. Accordingly, it is thus possible to further increase the drag coefficient if needed by means of activating the sub-arms. Joints or joint devices as discussed previously may mount the sub-arms to the foldable arm structures for allowing the additional extension of the sub-arms, similar as discussed previously.

In one embodiment, the driving system comprises at least one, or more, propellers or activator motors, or any type of thrust engine and the like. As an example, the UAV apparatus may e.g. be provided with a single propeller motor, or plurality of propeller devices may be provided where e.g. a single propeller motor may be attached to a single primary arm structure, e.g. if there are four primary arms structures there are four propeller motors, where a single propeller motor is associated to a single primary arm structure.

In one embodiment, the malfunction signal is further configured to trigger a stopping command for stopping the driving system. As an example, a fire or heat coming from the driving system might damage or even destroy the foldable material. Thus, by stopping/shutting down the driving system it is prevented that the driving system, e.g. propeller motor, damages the foldable material or any other parts of the recovery system.

In one embodiment, the apparatus further comprises at least one sensor configured to issue the malfunction signal in case a malfunction is sensed by the at least one sensor. Thus, in case of e.g. an operator of the UAV apparatus cannot visually detect any malfunction in the UAV apparatus the at least one sensor detects the malfunction automatically and thus it is ensured that the UAV apparatus arrives safely to the ground by deploying the recovery system. Sensors can also identify malfunction very quickly before the operator spots the malfunction. Malfunction can be for example be based on identifying and analyzing acceleration around any of its six degrees of freedom, changes in barometric pressure or any other mechanical, electrical or software failure.

In one embodiment, the malfunction signal is arranged to be manually triggered by an operator operating the UAV apparatus. This may make the UAV apparatus more economical since one or more sensors may not be needed and also serve as a backup if one or more of the sensors fail to identify malfunction.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Figures 1 to 5 show a perspective view and a side view of one embodiment of an unmanned area vehicle (UAV) apparatus according to the present invention, and
Figure 5 shows a zoomed up view of the UAV apparatus in figure 1.

### DESCRIPTION OF EMBODIMENTS

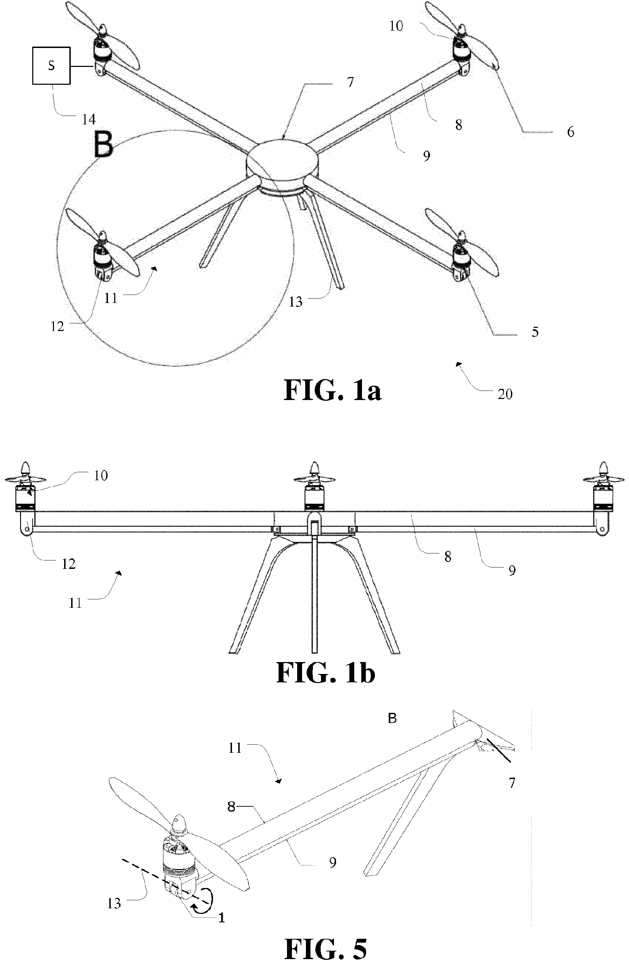

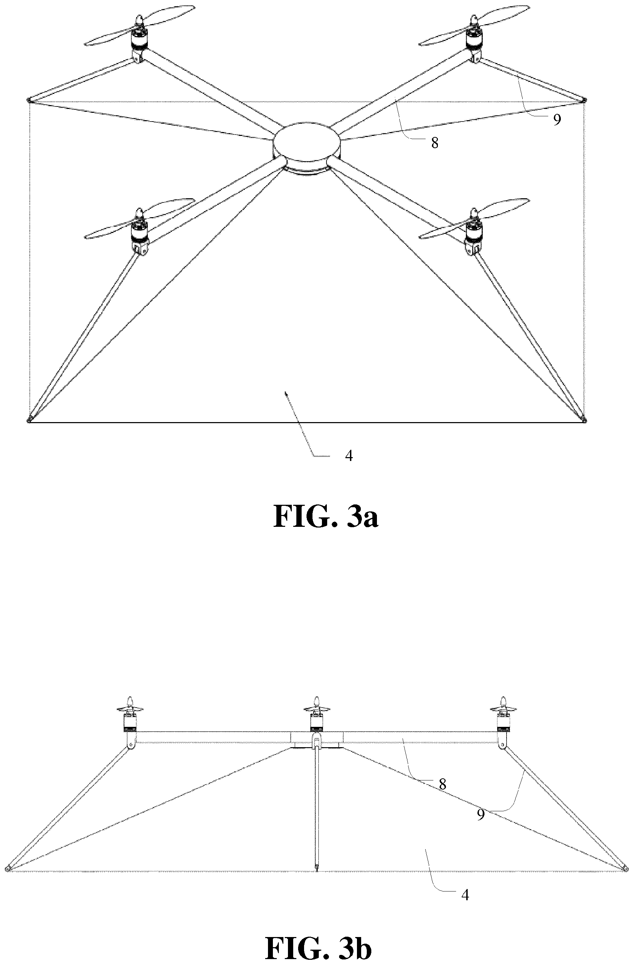

Figures 1 to 5 show a perspective view and a side view of one embodiment of an unmanned area vehicle (UAV) apparatus 20 according to the present invention, comprising a frame structure 7 which as shown here may be a center structure of the UAV, plurality of legs 13, plurality of primary arm structures 8 extending from the frame structure 7, which as shown here may extend radially away from the frame structure, a driving system 10 which may comprise plurality of rotating propellers 6 arranged at the end of the primary arm structures 8 for driving the UAV apparatus, and a recovery system 11. It should be noted that the number of primary arm structures should not be construed as being limited to four structures, but the number could just as well be less than four or more than four. Thus, for example the plurality of primary arm structures 8 may be equal to 3, 4, 5, 6, 7, 8, 9, 10 and higher numbers. Likewise, the number of foldable arms 9 may be 3, 4, 5, 6, 7, 8, 9, 10 and higher numbers. In order to ensure that the recovery system is functioning in a beneficial way, it is to be understood by the skilled person that the number of foldable arms 9 should then be at least three, possibly at least four, so to ensure the unfolding of the foldable material 4 with a resulting sufficient vertical velocity reduction of the UAV apparatus during malfunctioning. In the embodiments shown in Figures 1-5, the number of foldable arms 9 is equal to the number of primary arm structures 8 by each primary arm structure having pivotally mounted thereon a corresponding foldable arm 9, but it will readily be understood that the invention is not limited to these particular embodiments, thus in some embodiments (not shown) one, or more, primary arm structure(s) may have at least two foldable arms 9 mounted pivotally thereon.

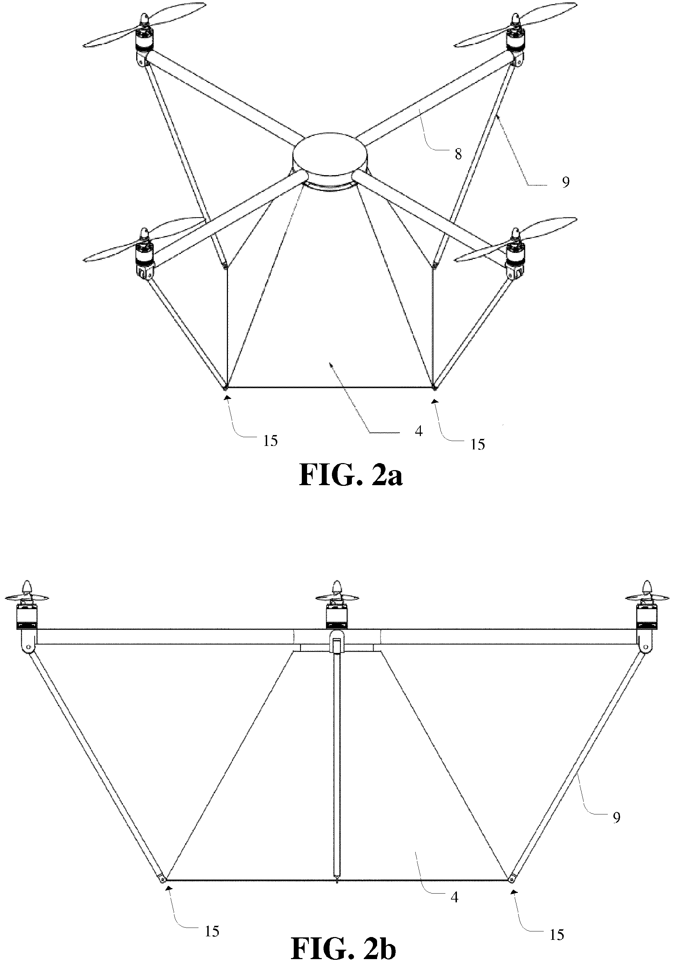

The recovery system 11 comprises plurality of foldable arms 9 pivotally mounted to the plurality of primary arm structures 8 at the free end area of the primary arm structures and extending along the primary arm structures 8, e.g. below them as shown in figure 1. The plurality of foldable arms 9 are configured to be moved from a closing position as shown in figure 1, where the foldable arms extend along the primary arm structures with their free ends pointing towards the frame structure 7, towards an open position as shown in figures 2 to 5 where the free ends point away from the frame structure. In the context of the present invention, any degree of pivotal opening of the foldable arm 9 will thus result in the free end (i.e. opposite the pivotally joined end) pointing away, at least to some extent, from the frame structure 7. The degree of opening should of course be suitable for the purpose of reducing vertical velocity by the unfolding, and thus final shape, of the foldable material 4.

The pivotal mounting may e.g. be done via plurality of joints, for example rotational joints or hinges and the like, that connect the plurality of foldable arms and plurality of primary arm structures together, respectively, at the distal ends of the primary arms and thus allow the plurality of foldable arms to be moved from closing position to open position after the locking-unlocking system has released the foldable arms. An actuator may be located at each of the joints where the foldable arms and the primary arms are connected together, for example spring, that both helps/facilitates moving the plurality of foldable arms to the open position. The actuator may also be configured to control the stability or orientation of the UAV apparatus during fall.

The recovery system 11 further comprises a foldable material 4 shown in figures 2-5 mounted at the free ends or free end areas 15 of the foldable arms 9, i.e. at opposite ends to the pivotal mounting, a locking-unlocking system 12 that is configured to maintain the plurality of foldable arms in a closing position as shown in the perspective view and the side view of figure 1.

The foldable material 4 may for example be made of, but is not limited to, Nylon, polymer or other fabric like material. Moreover, the foldable material 4 may in one embodiment be fixed underneath the primary arms 8 e.g. at the center of the vehicle such as within the frame structure 7.

In one exemplary embodiment, the functioning of the UAV apparatus is following:
A malfunction signal is issued indicating a malfunction in the UAV apparatus. The malfunction may e.g. be triggered via at least one sensor 14 at the UAV apparatus 20 which may be positioned anywhere on the UAV apparatus, or from an operator of the UAV apparatus. As an example, plurality of sensors 14 may be provided, e.g. at the frame structure, to detect acceleration around any of six degrees of freedom movement of the UAV, e.g. changes in barometric pressure or any other mechanical, electrical or software failure, heat differences etc.

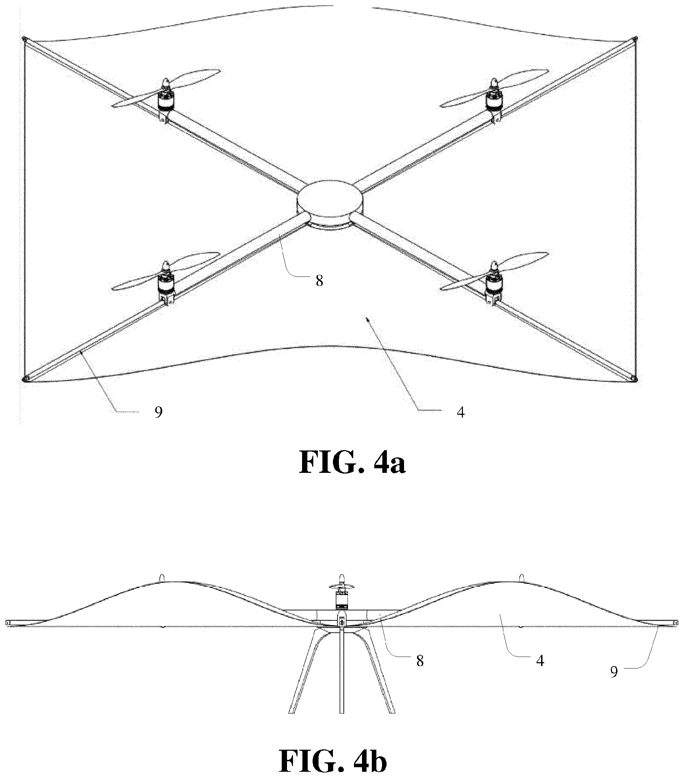

The malfunction signal triggers the locking-unlocking system 12 to un-lock the plurality of foldable arms 9 and thus move them from the closing position shown in figure 1 to an open position as shown sequentially in figures 2-4 and thus deploy the foldable material to at least to reduce the vertical velocity of the UAV apparatus until the foldable material is fully deployed as shown in figure 4. The malfunction signal may also be used to trigger a stopping function of the driving system 10. The locking-unlocking system 11 may be positioned anywhere on the primary arm structure(s) 8, on the foldable arms 9 or in or close to the frame structure 7.

In one embodiment, the movement of the foldable arms to the open position may be fully controlled and adapted to the circumstances whereby the rotation may include rotating the foldable arms via the at least one rotational joint or joint device between an angular position between 20-260°, such as around 180° as shown in figure 4.

The locking-unlocking system 12 may in one embodiment comprise an actuator and rotational joints defining the rotational axis 13 between the primary arms 8 and the foldable arms 9. This is illustrated in more details in figure 5 showing a zoomed up view of figure 1.

The actuator may be, but is not limited to, a torsional spring or other device that is capable of storing energy or an electrical, hydraulic or pneumatically driven actuator, configured to un-lock the flexible arms 9 such that they rotate rapidly and move from the closing position shown in figure 1 to the open position shown in figure 5 and thus deploy the fabric like material 4 so as to effectively increasing the surface are of the UAV apparatus 20.

The frame structure 7 may in one embodiment comprise a storage area for storing the foldable material in where it is folded together.

In one embodiment, each of the foldable arms comprise sub-arms (not shown) that are rotatable mounted to the foldable arms and configured to provide an additional extension to the primary arms structures, and where the foldable material is attached to the sub-arms. In this embodiment, the foldable material may be attached to a free end or free end area of the sub-arms. In that way it is possible to further increase the area of the foldable material by means of activating the sub-arms.

In one embodiment the foldable arms can be extended or retracted like a telescopic boom within the primary arm structure and the sub arms rotatable mounted to the foldable arm. In that way it is also possible to further increase the area of the foldable material once it is deployed.

Based on the above, when a loss in control of the UAV apparatus or other malfunction occur, it is possible to safely bring the UAV apparatus 20 down to the ground by means of increasing the surface area via foldable material 4 and thus increase the coefficient of drag and therefore reducing the vertical velocity of the UAV apparatus.

The foldable arms 9 may in one embodiment be stopped by e.g. a mechanical stopper that may block further rotation of the UAV apparatus and/or by utilizing the foldable material when it is fully deployed.

As shown in figure 4 the foldable arm 9 are moved about 180° resulting in almost doubled length of each of the primary arm structures 8. As already mentioned, additional foldable arms or sub-arms (not shown) may be installed to increase the surface area even further or to alter the shape. The foldable material 4 is then stretched between the ends of each of the foldable arms when the mechanism has fully deployed.

The UAV apparatus 20 may be designed such that after the fully deploying the flexible arms 9 as e.g. shown in figure 4, the flexible arms 9 can be folded back e.g. manually by the operator or by an actuator on board and the foldable material 4 may then be stowed back in the storage area of e.g. the frame structure 7.

The invention can be used in many variations. The number and shape of the primary arm structures 8 can be altered as well as increasing the number and shape of the foldable arms 9 and additional rotational joint 12 to fit specific frame. This allows to further increase the surface area or to alter the shape of the fabric like material 4 when it is fully deployed. The foldable arms can 9 may, as already stated, unfold at different angles and thus alter the shape of the fabric like material 4. The foldable arms 9 can be mechanically stopped by an end stop or using the fabric like material as an end stop or combination of those both. The fabric like material can have multiple shapes and slots to better control the airflow around and trough it. In one embodiment it is highly dependent on the multirotor frame and the application.

The driving system 10 which may comprise plurality of rotating propellers/motors that may be configured to stop automatically by e.g. mechanical methods or by e.g. a signal sent to the motors causing them to stop. This is an advantage in preventing e.g. the rotating propellers to cut through the fabric like material 4.

The foldable arms 9 may in one embodiment be folded from underneath the vehicle or from top or any other position there between, such as depicted in figures 1 to 5 by rotating them from underneath the vehicle. Furthermore the best setup is to utilize as lightweight and simple components as possible.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A recovery system (11) assembly configured to be used in relation to an unmanned aerial vehicle - UAV - apparatus, which comprises:
• a frame structure (7),
• plurality of at least three and preferably at least four primary arm structures (8) extending from the frame structure (7), and
• a driving system (10) for driving the UAV apparatus,
wherein the recovery system (11) comprises:
• a plurality of foldable arms (9) configured to be pivotally mounted to the plurality of primary arm structures (8) at the free end area of the primary arm structures, wherein each of said primary arm structure (8) is configured to have at least one foldable arm mounted thereon, the plurality of foldable arms being configured to be moved from a closing position where the foldable arms extend along the primary arm structures with their free ends pointing towards the frame structure, towards an open position where the free ends point away from the frame structure,
• a foldable material (4) configured to be mounted to the foldable arms (9), and
• a locking-unlocking system (12) configured to maintain the plurality of foldable arms (9) in a closing position, where in response to a malfunction signal indicating a malfunction in the UAV apparatus, the locking-unlocking system is configured to move the plurality of foldable arms from the closing position to an open position and thus deploy the foldable material to at least to reduce the vertical velocity of the UAV apparatus.

2. An unmanned aerial vehicle - UAV - apparatus (20), comprising:
• a frame structure (7),
• a plurality of at least three and preferably at least four primary arm structures (8) extending from the frame structure (7),
• a driving system (10) for driving the UAV apparatus, and
• a recovery system (11) according to claim 1,
wherein
• the plurality of foldable arms (9) is pivotally mounted to the plurality of primary arm structures at the free end area of the primary arm structures, wherein each of said primary arm structure (8) has at least one foldable arm mounted thereon, the plurality of foldable arms being configured to be moved from the closing position where the foldable arms extend along the respective primary arm structures with their free ends pointing towards the frame structure, towards the open position where the free ends point away from the frame structure,
• the foldable material (4) is mounted to the foldable arms,
• the blocking-unlocking system (12) is configured to maintain the plurality of foldable arms in the closing position, where in response to the malfunction signal indicating a malfunction in the UAV apparatus, the locking-unlocking system is configured to release the plurality of foldable arms from the closing position to the open position and thus deploy the foldable material to at least to reduce the vertical velocity of the UAV apparatus.

3. The UAV apparatus according to claim 2, wherein the plurality of foldable arms (9) are arranged such that in the closing position the foldable arms are arranged each along its respective primary arm structure.

4. The UAV apparatus according to claim 2 or 3, wherein the locking-unlocking system (12) comprises at least one actuator connected to the plurality of foldable arms for actuating the movement of the plurality of foldable arms from the closing position to the open position.

5. The UAV apparatus according to any of claims 2 to 4, wherein the frame structure (7) comprises a storage area configured to store the foldable material.

6. The UAV apparatus according to any of claims 2 to 5, wherein the foldable material (4) is mounted to the free end (15) or the free end area of the foldable arm.

7. The UAV apparatus according to any of claims 2 to 6, wherein the foldable arms are connected to the primary arm structure via flexible or movable joint device in such way as to permit motion of the flexible arm relative to the primary arm.

8. The UAV apparatus according to claim 7, wherein moving the foldable arms to the open position includes rotating the foldable arms via the at least one joint device between an angular position between 20-260°, such as around 180°, such that in the open position the foldable arms act as an extension arms to the primary arms structures.

9. The UAV apparatus according to claim 7 or 8, wherein the at least one joint device is configured to dynamically adjust the angular position of the foldable arms so as to adjust the shape of the foldable material.

10. The UAV apparatus according to any of claims 2 to 9, wherein each of the foldable arms comprises a sub-arm connected to the to the foldable arms via flexible or movable joint device configured to provide an additional extension to the primary arms structures, and where the foldable material is attached to a free end or free end area of the sub-arm.

11. The UAV apparatus according to any of claims 2 to 10, wherein the at least one driving system comprises at least propeller motor.

12. The UAV apparatus according to any of claims 2 to 11, wherein the malfunction signal is further configured to trigger a stopping command for stopping the driving system.

13. The UAV system according to any of claims 2 to 12, further comprising at least one sensor configured to issue the malfunction signal in case a malfunction is sensed by the at least one sensor.

14. The UAV system according to any of claims 2 to 13, wherein the malfunction signal is arranged for being manually triggered by an operator operating the UAV apparatus.

15. A method for recovering an unmanned aerial vehicle - UAV - apparatus (20), which comprises:
• a frame structure (7),
• a plurality of at least three and preferably at least four primary arm structures (8) extending from the frame structure (7), and
• a driving system (10) for driving the UAV apparatus,
• a recovery system (11), wherein the recovery system comprises
• a plurality of foldable arms (9) pivotally mounted to the plurality of primary arm structures (8) at the free end area of the primary arm structures, wherein each of said primary arm structures (8) has at least one foldable arm (9) mounted thereon, the plurality of foldable arms being configured to be moved from a closing position where the foldable arms extend along the primary arm structures with their free ends pointing towards the frame structure, towards an open position where the free ends point away from the frame structure,
• a foldable material (4) mounted to the foldable arms (9),
• wherein the method of recovering comprises:
• maintaining the plurality of foldable arms in a closing position, and
• releasing, in response to a malfunction signal indicating a malfunction in the UAV apparatus, the plurality of foldable arms from the closing position to an open position and thus deploy the foldable material to at least to reduce the vertical velocity of the UAV apparatus.

## Patentansprüche

1. Bergungssystemanordnung (11), dazu ausgelegt, im Zusammenhang mit einer unbemannten Luftfahrzeug- (UAV-) Vorrichtung verwendet zu werden, die umfasst:
• eine Rahmenstruktur (7),
• eine Vielzahl von mindestens drei und vorzugsweise mindestens vier primären Armstrukturen (8), die sich von der Rahmenstruktur (7) erstrecken, und
• ein Antriebssystem (10) zum Antreiben der UAV-Vorrichtung,
wobei das Bergungssystem (11) umfasst:
• eine Vielzahl von faltbaren Armen (9), dazu ausgelegt, drehbar an der Vielzahl von primären Armstrukturen (8) an dem freien Endbereich der primären Armstrukturen montiert zu sein, wobei jede der primären Armstrukturen (8) dazu ausgelegt ist, mindestens einen daran montierten faltbaren Arm aufzuweisen, wobei die Vielzahl von faltbaren Armen dazu ausgelegt ist, von einer schließenden Position, wo sich die faltbaren Arme entlang der primären Armstrukturen erstrecken, wobei ihre freien Enden in Richtung der Rahmenstruktur zeigen, in Richtung einer offenen Position, wo die freien Enden von der Rahmenstruktur wegzeigen, bewegt zu werden,
• ein faltbares Material (4), dazu ausgelegt, an den faltbaren Armen (9) montiert zu sein, und
• ein Verriegelungs-Entriegelungs-System (12), dazu ausgelegt, die Vielzahl von faltbaren Armen (9) in einer schließenden Position zu halten, wobei das Verriegelungs-Entriegelungs-System dazu ausgelegt ist, in Reaktion auf ein Funktionsstörungssignal, das eine Funktionsstörung in der UAV-Vorrichtung angibt, die Vielzahl von faltbaren Armen von der schließenden Position in eine offene Position zu bewegen und damit das faltbare Material zu entfalten, um die vertikale Geschwindigkeit der UAV-Vorrichtung mindestens zu reduzieren.

2. Unbemannte Luftfahrzeug- (UAV-) Vorrichtung (20), umfassend:
• eine Rahmenstruktur (7),
• eine Vielzahl von mindestens drei und vorzugsweise mindestens vier primären Armstrukturen (8), die sich von der Rahmenstruktur (7) erstrecken,
• ein Antriebssystem (10) zum Antreiben der UAV-Vorrichtung, und
• ein Bergungssystem (11) nach Anspruch 1,
wobei:
• die Vielzahl von faltbaren Armen (9) drehbar an der Vielzahl von primären Armstrukturen an dem freien Endbereich der primären Armstrukturen montiert ist, wobei jede der primären Armstrukturen (8) mindestens einen daran montierten faltbaren Arm aufweist, wobei die Vielzahl von faltbaren Armen dazu ausgelegt ist, von der schließenden Position, wo sich die faltbaren Arme entlang der entsprechenden primären Armstrukturen erstrecken, wobei ihre freien Enden in Richtung der Rahmenstruktur zeigen, in Richtung der offenen Position, wo die freien Enden von der Rahmenstruktur wegzeigen, bewegt zu werden,
• das faltbare Material (4) an den faltbaren Armen montiert ist,
• das Verriegelungs-Entriegelungs-System (12) dazu ausgelegt ist, die Vielzahl von faltbaren Armen in der schließenden Position zu halten, wobei das Verriegelungs-Entriegelungs-System dazu ausgelegt ist, in Reaktion auf ein Funktionsstörungssignal, das eine Funktionsstörung in der UAV-Vorrichtung angibt, die Vielzahl von faltbaren Armen von der schließenden Position in die offene Position zu bewegen und damit das faltbare Material zu entfalten, um die vertikale Geschwindigkeit der UAV-Vorrichtung mindestens zu reduzieren.

3. UAV-Vorrichtung nach Anspruch 2, wobei die Vielzahl von faltbaren Armen (9) so angeordnet sind, dass die faltbaren Arme in der schließenden Position jeweils entlang ihrer entsprechenden primären Armstruktur angeordnet sind.

4. UAV-Vorrichtung nach Anspruch 2 oder 3, wobei das Verriegelungs-Entriegelungs-System (12) mindestens einen Aktuator umfasst, angeschlossen an die Vielzahl von faltbaren Armen zum Veranlassen der Bewegung der Vielzahl von faltbaren Armen von der schließenden Position in die offene Position.

5. UAV-Vorrichtung nach einem der Ansprüche 2 bis 4, wobei die Rahmenstruktur (7) einen Verwahrungsbereich, dazu ausgelegt, das faltbare Material zu verwahren, umfasst.

6. UAV-Vorrichtung nach einem der Ansprüche 2 bis 5, wobei das faltbare Material (4) an dem freien Ende (15) oder dem freien Endbereich des faltbaren Armes montiert ist.

7. UAV-Vorrichtung nach einem der Ansprüche 2 bis 6, wobei die faltbaren Arme über eine flexible oder bewegbare Gelenkvorrichtung so mit dem primären Arm verbunden sind, dass Bewegung des flexiblen Armes relativ zu dem primären Arm gestattet wird.

8. UAV-Vorrichtung nach Anspruch 7, wobei ein Bewegen der faltbaren Arme in die offene Position ein Drehen der faltbaren Arme über die mindestens eine Gelenkvorrichtung zwischen einer Winkelposition zwischen 20-260°, beispielsweise etwa 180°, beinhaltet, sodass die faltbaren Arme in der offenen Position als Verlängerungsarme für die primären Armstrukturen agieren.

9. UAV-Vorrichtung nach Anspruch 7 oder 8, wobei die mindestens eine Gelenkvorrichtung dazu ausgelegt ist, die Winkelposition der faltbaren Arme so einzustellen, dass die Form des faltbaren Materials eingestellt ist.

10. UAV-Vorrichtung nach einem der Ansprüche 2 bis 9, wobei jeder der faltbaren Arme einen Teilarm umfasst, der mit den faltbaren Armen über eine flexible oder bewegbare Gelenkvorrichtung, die dazu ausgelegt ist, den primären Armstrukturen eine zusätzliche Verlängerung bereitzustellen, verbunden ist, und wobei das faltbare Material an einem freien Ende oder freien Endbereich des Teilarmes angebracht ist.

11. UAV-Vorrichtung nach einem der Ansprüche 2 bis 10, wobei das mindestens eine Antriebssystem mindestens einen Propellermotor umfasst.

12. UAV-Vorrichtung nach einem der Ansprüche 2 bis 11, wobei das Funktionsstörungssignal ferner dazu ausgelegt ist, einen Stoppbefehl zum Stoppen des Antriebssystems auszulösen.

13. UAV-System nach einem der Ansprüche 2 bis 12, ferner umfassend mindestens einen Sensor, dazu ausgelegt, das Funktionsstörungssignal in dem Fall auszugeben, dass von dem mindestens einen Sensor eine Funktionsstörung erkannt wird.

14. UAV-System nach einem der Ansprüche 2 bis 13, wobei das Funktionsstörungssignal angeordnet ist, um von einem die UAV-Vorrichtung bedienenden Bediener manuell ausgelöst zu werden.

15. Verfahren zum Bergen einer unbemannten Luftfahrzeug- (UAV-) Vorrichtung (20), die umfasst:
• eine Rahmenstruktur (7),
• eine Vielzahl von mindestens drei und vorzugsweise mindestens vier primären Armstrukturen (8), die sich von der Rahmenstruktur (7) erstrecken, und
• ein Antriebssystem (10) zum Antreiben der UAV-Vorrichtung,
• ein Bergungssystem (11), wobei das Bergungssystem umfasst:
• eine Vielzahl von faltbaren Armen (9), drehbar an der Vielzahl von primären Armstrukturen (8) an dem freien Endbereich der primären Armstrukturen montiert, wobei jede der primären Armstrukturen (8) mindestens einen daran montierten faltbaren Arm (9) aufweist, wobei die Vielzahl von faltbaren Armen dazu ausgelegt ist, von einer schließenden Position, wo sich die faltbaren Arme entlang der primären Armstrukturen erstrecken, wobei ihre freien Enden in Richtung der Rahmenstruktur zeigen, in Richtung einer offenen Position, wo die freien Enden von der Rahmenstruktur wegzeigen, bewegt zu werden,
• ein faltbares Material (4), montiert an den faltbaren Armen (9),
• wobei das Verfahren der Bergung umfasst:
• Halten der Vielzahl von faltbaren Armen in einer schließenden Position, und
• Freigeben, in Reaktion auf ein Funktionsstörungssignal, das eine Funktionsstörung in der UAV-Vorrichtung angibt, der Vielzahl von faltbaren Armen von der schließenden Position in eine offene Position und damit Entfalten des faltbaren Materials, um die vertikale Geschwindigkeit der UAV-Vorrichtung mindestens zu reduzieren.

## Revendications

1. Ensemble système de récupération (11) conçu pour être utilisé en relation avec un appareil de véhicule aérien sans pilote (UAV), qui comprend :
• une structure de cadre (7),
• une pluralité d'au moins trois et de préférence d'au moins quatre structures de bras primaires (8) s'étendant depuis la structure de cadre (7), et
• un système d'entraînement (10) permettant d'entraîner l'appareil UAV,
le système de récupération (11) comprenant :
• une pluralité de bras pliables (9) conçus pour être montés de manière pivotante sur la pluralité de structures de bras primaires (8) au niveau de la zone d'extrémité libre des structures de bras primaires, chacune desdites structures de bras primaires (8) étant conçue pour avoir au moins un bras pliable monté sur celle-ci, la pluralité de bras pliables étant conçus pour être déplacés d'une position de fermeture, dans laquelle les bras pliables s'étendent le long des structures de bras primaires avec leurs extrémités libres dirigées vers la structure de cadre, à une position ouverte dans laquelle les extrémités libres sont dirigées à l'opposé de la structure de cadre,
• un matériau pliable (4) conçu pour être monté sur les bras pliables (9), et
• un système de verrouillage-déverrouillage (12) conçu pour maintenir la pluralité de bras pliables (9) dans une position de fermeture dans laquelle, en réponse à un signal de dysfonctionnement indiquant un dysfonctionnement dans l'appareil UAV, le système de verrouillage-déverrouillage est conçu pour déplacer la pluralité de bras pliables de la position de fermeture à une position ouverte et, de ce fait, déployer le matériau pliable en vue de réduire au moins la vitesse verticale de l'appareil UAV.

2. Appareil (20) de véhicule aérien sans pilote (UAV), comprenant :
• une structure de cadre (7),
• une pluralité d'au moins trois et de préférence d'au moins quatre structures de bras primaires (8) s'étendant depuis la structure du cadre (7),
• un système d'entraînement (10) permettant d'entraîner l'appareil UAV, et
• un système de récupération (11) selon la revendication 1, dans lequel
• la pluralité de bras pliables (9) sont montés de manière pivotante sur la pluralité de structures de bras primaires au niveau de la zone d'extrémité libre des structures de bras primaires, chacune desdites structures de bras primaires (8) ayant au moins un bras pliable monté sur celle-ci, la pluralité de bras pliables étant conçus pour être déplacés de la position de fermeture, dans laquelle les bras pliables s'étendent le long des structures de bras primaires respectives avec leurs extrémités libres dirigées vers la structure de cadre, à la position ouverte dans laquelle les extrémités libres sont dirigées à l'opposé de la structure de cadre,
• le matériau pliable (4) est monté sur les bras pliables,
• le système de verrouillage-déverrouillage (12) est conçu pour maintenir la pluralité de bras pliables dans la position de fermeture dans laquelle, en réponse au signal de dysfonctionnement indiquant un dysfonctionnement dans l'appareil UAV, le système de verrouillage-déverrouillage est conçu pour libérer la pluralité de bras pliables de la position de fermeture à la position ouverte et, de ce fait, déployer le matériau pliable en vue de réduire au moins la vitesse verticale de l'appareil UAV.

3. Appareil UAV selon la revendication 2, dans lequel la pluralité de bras pliables (9) sont disposés de telle sorte qu'en position de fermeture, les bras pliables sont disposés chacun le long de sa structure de bras primaire respective.

4. Appareil UAV selon la revendication 2 ou 3, dans lequel le système de verrouillage-déverrouillage (12) comprend au moins un actionneur relié à la pluralité de bras pliables pour actionner le mouvement de la pluralité de bras pliables de la position de fermeture à la position ouverte.

5. Appareil UAV selon l'une quelconque des revendications 2 à 4, dans lequel la structure de cadre (7) comprend une zone de stockage conçue pour stocker le matériau pliable.

6. Appareil UAV selon l'une quelconque des revendications 2 à 5, dans lequel le matériau pliable (4) est monté sur l'extrémité libre (15) ou la zone d'extrémité libre du bras pliable.

7. Appareil UAV selon l'une quelconque des revendications 2 à 6, dans lequel les bras pliables sont reliés à la structure de bras primaire par un dispositif d'articulation flexible ou mobile de manière à permettre le mouvement du bras flexible par rapport au bras primaire.

8. Appareil UAV selon la revendication 7, dans lequel le déplacement des bras pliables vers la position ouverte comprend la rotation des bras pliables par l'intermédiaire de l'au moins un dispositif d'articulation entre une position angulaire comprise entre 20° et 260°, comme environ 180°, de telle sorte que dans la position ouverte, les bras pliables agissent comme des bras d'extension des structures de bras primaires.

9. Appareil UAV selon la revendication 7 ou 8, dans lequel l'au moins un dispositif d'articulation est conçu pour ajuster dynamiquement la position angulaire des bras pliables de manière à ajuster la forme du matériau pliable.

10. Appareil UAV selon l'une quelconque des revendications 2 à 9, dans lequel chacun des bras pliables comprend un sous-bras relié aux bras pliables par un dispositif d'articulation flexible ou mobile conçu pour fournir une extension supplémentaire aux structures de bras primaires, et dans lequel le matériau pliable est fixé à une extrémité libre ou une zone d'extrémité libre du sous-bras.

11. Appareil UAV selon l'une quelconque des revendications 2 à 10, dans lequel l'au moins un système d'entraînement comprend au moins un moteur à hélice.

12. Appareil UAV selon l'une quelconque des revendications 2 à 11, dans lequel le signal de dysfonctionnement est en outre conçu pour déclencher une commande d'arrêt pour arrêter le système d'entraînement.

13. Système UAV selon l'une quelconque des revendications 2 à 12, comprenant en outre au moins un capteur conçu pour émettre le signal de dysfonctionnement au cas où un dysfonctionnement serait détecté par l'au moins un capteur.

14. Système UAV selon l'une quelconque des revendications 2 à 13, dans lequel le signal de dysfonctionnement est conçu pour être déclenché manuellement par un opérateur qui fait fonctionner l'appareil UAV.

15. Procédé de récupération d'un appareil (20) de véhicule aérien sans pilote (UAV), qui comprend :
• une structure de cadre (7),
• une pluralité d'au moins trois et de préférence d'au moins quatre structures de bras primaires (8) s'étendant depuis la structure de cadre (7), et
• un système d'entraînement (10) permettant d'entraîner l'appareil UAV,
• un système de récupération (11), le système de récupération comprenant
• une pluralité de bras pliables (9) montés de manière pivotante sur la pluralité de structures de bras primaires (8) au niveau de la zone d'extrémité libre des structures de bras primaires, chacune desdites structures de bras primaires (8) ayant au moins un bras pliable (9) monté sur celle-ci, la pluralité de bras pliables étant conçus pour être déplacés d'une position de fermeture, dans laquelle les bras pliables s'étendent le long des structures de bras primaires avec leurs extrémités libres dirigées vers la structure de cadre, à une position ouverte dans laquelle les extrémités libres sont dirigées à l'opposé de la structure de cadre,
• un matériau pliable (4) monté sur les bras pliables (9),
• le procédé de récupération comprenant :
• le maintien de la pluralité des bras repliables en position de fermeture, et
• la libération, en réponse à un signal de dysfonctionnement indiquant un dysfonctionnement de l'appareil UAV, de la pluralité de bras pliables de la position de fermeture à une position ouverte et, de ce fait, le déploiement du matériau pliable en vue de réduire au moins la vitesse verticale de l'appareil UAV.
